# EUROPEAN PATENT APPLICATION

(11) **EP 4 491 569 A1**
(43) Date of publication of application: **15.01.2025**
(21) Application number: 23185466.2
(22) Date of filing: 14.07.2023
(51) Int. Cl.: C01B 3/32, H01M 8/06, C01B 3/58

(54) **CONTROL METHOD FOR A REFORMER DEVICE TO KEEP THE FUEL WITHIN A TEMPERATURE RANGE AND REFORMER DEVICE**

(71) Applicant: AVL List GmbH, 8020 Graz (AT)
(72) Inventor: Neubauer, Raphael, 8042 Graz (AT); Goll, Markus, 8010 Graz (AT)
(74) Representative: Gamper, Bettina

(57) **Abstract**

The invention is related to a control method for a reformer device (10) of a fuel cell system (100) to keep a fuel comprising methanol (20) within a temperature range in the reformer device (10), characterized by the following steps:
- pre-tempering the fuel comprising methanol (20) to a reformer device inlet temperature, which is at or higher than a methanation light-off temperature of a catalyst (24) of the reformer device (10),
- directing the pre-tempered fuel comprising methanol (20) through the reformer device (10) in order to allow a catalytic reformation and methanation of the fuel comprising methanol (20) to a reformed gas (26), and
- keeping a temperature of the reformed gas (26) in the reformer device (10) in the temperature range during passage through the reformer device (10) from a reformer inlet side (30) to a reformer outlet side (32), wherein a lower limit of the temperature range of the temperature of the reformed gas (26) is the methanation light-off temperature of a catalyst (24), and wherein the difference between the lower limit and an upper limit of the temperature range is smaller than 150°C.

## Description

The present invention is related to a control method for a reformer device of a fuel cell system to keep the fuel within a temperature range, a computer program product for carrying out such a control method, a reformer device as well as a fuel cell system comprising such a reformer device.

It is known that methanol can be used as a fuel for fuel cells. For example, there are direct methanol fuel cells (DMFC), but they don't have the efficiency and service life of a solid oxide fuel cell.

Present technologies usually comprise methanol reforming. In order to operate a solid oxide fuel cell (SOFC) with methanol, for example, the methanol must first be reformed. Steam reforming is mainly carried out on e.g. copper (Cu) catalysts at low temperatures (280°C - 340°C). The product gas is a synthesis gas with a very high hydrogen content.

The disadvantage of the known solutions is that methanation cannot take place in the reformer because other catalysts than copper (Cu) catalysts are required for this reaction.

It is an object of the present invention to overcome the disadvantages described above at least partly. In particular it is an object of the present invention to provide a solution to also allow a methanation reformation in the reformer device.

Aforesaid problem is solved by a control method with the features of claim 1, by a computer program product with the features of claim 6, by a reformer device with the features of claim 7 as well as a fuel cell system with the features of claim 11. Further features and details of the invention result from the subclaims, the description and the drawings. Features and details described in connection with the control method according to the invention naturally also apply in connection with the computer program product according to the invention, with the reformer device according to the invention as well as with the fuel cell system according to the invention, and vice versa in each case, so that reference is or can always be made mutually with regard to the disclosure concerning the individual aspects of the invention.

According to the present invention a control method for a reformer device of a fuel cell system is provided. The control method keeps a fuel comprising methanol within a temperature range in the reformer device. The control method comprises the following steps:
1) pre-tempering the fuel comprising methanol to a reformer device inlet temperature, which is at or higher than a methanation light-off temperature of a catalyst of the reformer device,
2) directing the pre-tempered fuel comprising methanol through the reformer device in order to allow a catalytic reformation and methanation of the fuel comprising methanol to a reformed gas, and
3) keeping a temperature of the reformed gas in the reformer device in the temperature range during passage through the reformer device from a reformer inlet side to a reformer outlet side, wherein a lower limit of the temperature range of the temperature of the reformed gas is the methanation light-off temperature of a catalyst, and wherein the difference between the lower limit and an upper limit of the temperature range is smaller than 150°C.

Because the fuel comprising methanol which is reformed to the reformed gas is kept above the methanation light-off temperature of the catalyst a catalytic methanation can occur in the reformer device. If the temperature of the reformed gas increases when it leaves the reformer device at the reformer outlet side the amount of methane decreases. Therefore, the temperature of the reformed gas is kept in the temperature range.

In order to achieve high efficiencies of a fuel cell, in particular a solid oxide fuel cell (SOFC), two features are crucial: 1) a methanation reaction in the reformer, and 2) a low reformer outlet temperature (ideally <500°C). Studies have shown that the net electrical efficiency of the fuel cell increases by 4% when the hydrogen concentration (H₂ concentration) at the reformer outlet is reduced by 13% while the methane concentration (CH₄ concentration) is increased by 3% to a total of 7%. The increase in efficiency is caused by the internal reforming of the methane (CH₄) in the stack of the fuel cell, in particular of the solid oxide fuel cell (SOFC), which can reduce the air volume and thus the fan output.

A reforming light-off temperature is especially a temperature for a light-off of a catalyst of the reformer device.

According to an embodiment of the control method the difference between the lower limit and the upper limit of the temperature range is smaller than 100°C and preferably smaller than 50°C. Advantageously, because the upper limit is close to the lower limit the temperature of the reformed gas when leaving the reformer device at the reformer outlet side is not too high so that there is a sufficient amount of methane in the reformed gas when reaching the fuel cell.

According to a further embodiment of the control method the catalyst is a precious metal catalyst having a methanation light-off temperature in the range of 380°C to 470°C, preferably in the range of 390°C to 460°C and more preferably in the range of 400°C to 450°C. A precious metal catalyst comprising a precious metal can be a suitable catalyst having a methanation light-off temperature in the mentioned temperature ranges. Alternatively, a catalyst comprising nickel (Ni) can also be used. According to the invention the catalyst can advantageously also be a Ni-based catalyst.

According to a further embodiment of the control method keeping the temperature of the reformed gas in the reformer device in the temperature range is realized by heat exchange with a mass stream. The mass stream is provided from an air supply of the fuel cell system and/or from an air exhaust flow of the fuel cell system. Further the mass stream is flowing in a same direction or in an opposite direction than a stream of reformed gas. Because of the mass stream the temperature of the reformed gas in the reformer device can be tempered.

The methanation light-off temperature of the catalyst is already high. In addition, the reforming reaction of the fuel comprising methanol in the reformer device is exothermic below 540°C, i.e. energy is released, which in turn increases the reformer outlet temperature at the reformer outlet side and thus reduces the methane content (CH₄ content) in the reformed gas. Aforesaid exothermic type of reaction is in particular dependent on a high recirculation rate. In order to achieve the highest possible efficiencies, the reformer device should be operated as close as possible to the methanation light-off temperature of the catalyst without the temperature of the reformed gas at the reformer outlet at the reformer outlet side rising too much.

According to a further embodiment of the control method the mass stream is larger than 1.5 times the stream of reformed gas or the mass stream is larger than 2 times the stream of reformed gas or the mass stream is larger than 3 times the stream of reformed gas or the mass stream is larger than 4 times the stream of reformed gas. Advantageously, the larger the mass stream the better the tempering, in particular the cooling works.

According to the present invention a computer program product for carrying out a control method according to the above or below described control method is provided.

According to the present invention a reformer device for keeping a pre-tempered fuel comprising methanol passing through the reformer device to be reformed within a temperature range is provided. The reformer device comprises a tempering module and a fuel flow module. The tempering module comprises a flow passage for a mass stream to pass through the reformer device. The fuel flow module comprises a flow passage for the fuel comprising methanol to pass through the reformer device, wherein the flow passage comprises a catalyst for a reformation and methanation of the fuel comprising methanol to a reformed gas. Further the tempering module and the fuel flow module are thermally connected, so that the tempering module is adapted to temper the fuel flow module and the reformed gas passing through the reformer device.

Because of the thermal connection between the tempering module and the fuel flow module it is possible to temper the reformed gas passing through the reformer device. This allows to keep the reformed gas in the right temperature range while passing through the reformer device and when exiting the reformer device at the reformer outlet side. A reduction of the amount of methane (CH₄) in the reformed gas can be avoided.

According to an embodiment the reformer device comprises a reformer inlet side and a reformer outlet side. Further, the reformer device extends in a longitudinal direction from the reformer inlet side to the reformer outlet side. The fuel flow module comprising the flow passage is adapted for the fuel comprising methanol to flow from the reformer inlet side to the reformer outlet side while being reformed. The tempering module comprising the flow passage is adapted for the mass stream to flow from the reformer inlet side to the reformer outlet side or is adapted for the mass stream to flow from the reformer outlet side to the reformer inlet side.

That means a heat transfer between the fuel flow module and the tempering module, in particular a cooling of the fuel flow module, is possible no matter in which direction the mass stream flows.

According to a further embodiment of the reformer device the cross sectional area of the flow passage of the tempering module is larger than 1,5 times, 2 times, 3 times or 4 times the cross sectional area of the flow passage of the fuel flow module. The larger the cross sectional area of the flow passage of the tempering module is the larger is also the possible heat transfer from the fuel flow module to the tempering module.

According to a further embodiment of the reformer device the tempering module comprises a tempering module heat exchange element and the fuel flow module comprises a fuel flow module heat exchange element, wherein the tempering module heat exchange element comprises at least one plate and/or at least one pipe, and wherein the fuel flow module heat exchange element comprises at least one plate and/or at least one pipe.

In a simple configuration the tempering module heat exchange element and/or the fuel flow module heat exchange element comprise just one plate for the heat exchange. However, each of the tempering module heat exchange element and the fuel flow module heat exchange element can comprise several plates. Alternatively, each of the tempering module heat exchange element and the fuel flow module heat exchange element can comprise one or more pipes.

According to the present invention a fuel cell system is provided comprising a reformer device as described above or below, a fuel supply heat exchanger for pre-tempering the fuel comprising methanol, and a fuel cell, in particular a solid oxide fuel cell (SOFC). Advantageously, with such a fuel cell system the efficiency can be increased due to the methanation in the reformer device. The increase in efficiency results from the internal reforming of the methane in the fuel cell stack.

According to an embodiment the fuel cell system comprises an air supply, a first air supply heat exchanger and a second air supply heat exchanger, wherein the fuel cell system is adapted to preheat air provided from the air supply by the first air supply heat exchanger and/or the second air supply heat exchanger before entering the fuel cell. With this configuration of the fuel cell system it is possible to temper the air to a reformer device inlet temperature before entering the reformer device and to differently temper the air before entering the fuel cell.

According to a further embodiment the fuel cell system is adapted to direct more than 80%, or more than 90% or more than 99% of the air provided from the air supply to the reformer device for keeping the fuel comprising methanol which is to be reformed in the reformer device within a given temperature range in the reformer device. The air is provided from the air supply and the air supply line is directed through the reformer device. Alternatively, the air is provided from the air supply, the air supply line is directed to the fuel cell and the air exhaust flow from the fuel cell is directed through the reformer device.

According to a further embodiment of the fuel cell system the reformer device is arranged between the first air supply heat exchanger and the second air supply heat exchanger with respect to a flow direction of the air provided from the air supply. Because the reformer device is in the middle between the first air supply heat exchanger and the second air supply heat exchanger it is possible to temper the air before entering the reformer device differently compared to the air before entering the fuel cell.

According to a further embodiment the fuel cell system comprises an air supply line extending from the air supply to the fuel cell, wherein the first air supply heat ex-changer and the second air supply heat exchanger are arranged on the air supply line, wherein the fuel cell system comprises an air bypass for bypassing the first air supply heat exchanger on the air supply line and/or the fuel cell system comprises an air bypass for bypassing the second air supply heat exchanger on the air supply line and/or the fuel cell system comprises an air bypass for bypassing the first air supply heat exchanger and the second air supply heat exchanger on the air supply line.

Bypassing the first air supply heat exchanger on the air supply line with the air bypass means that after bypassing the first air supply heat exchanger the air is returned to the air supply line or the air is returned to the air exhaust flow. Bypassing the second air supply heat exchanger on the air supply line with the air bypass means that after bypassing the second air supply heat exchanger the air is returned to the air supply line or the air is returned to the air exhaust flow. Bypassing the first air supply heat exchanger and the second air supply heat exchanger on the air supply line with the air bypass means that after bypassing the first air supply heat exchanger and the second air supply heat exchanger the air is returned to the air supply line or the air is returned to the air exhaust flow.

With the air bypass or with the air bypasses it is possible to temper the air or the exhaust air entering the reformer device and it is possible to temper the air entering the fuel cell.

Further advantages, features and details of the invention will be apparent from the following description, in which embodiments of the invention are described in detail with reference to the drawings. Those drawings show:
- Figure 1: a schematic view of a section through a reformer device according to an embodiment of the invention,
- Figure 2: a schematic diagram of temperature curves along the longitudinal direction of the reformer device from Fig. 1,
- Figure 3: a schematic view of an embodiment of a fuel cell system,
- Figure 4: a schematic view of another embodiment of a fuel cell system,
- Figure 5: a schematic view of another embodiment of a fuel cell system,
- Figure 6: a schematic view of another embodiment of a fuel cell system,
- Figure 7: a schematic view of another embodiment of a fuel cell system, and
- Figure 8: a schematic view of another embodiment of a fuel cell system.

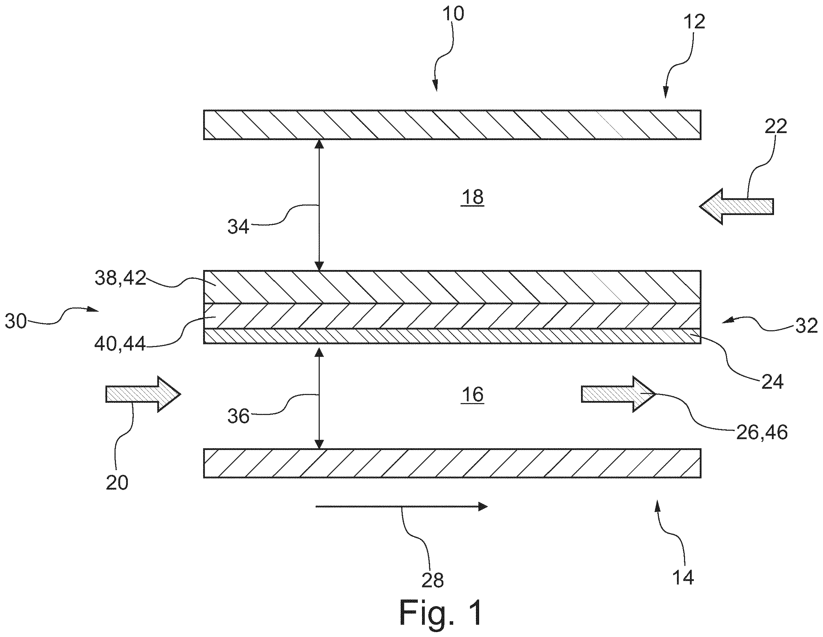

Fig. 1 shows a schematic view of a section through a reformer device 10 according to an embodiment of the invention. The reformer device 10 comprises a tempering module 12 and a fuel flow module 14, wherein the tempering module 12 and the fuel flow module 14 are thermally connected. The tempering module 12 comprises a flow passage 18 for a mass stream 22 to pass through the reformer device 10. The mass stream 22 is indicated as an arrow in Fig. 1. The fuel flow module 14 comprises a flow passage 16 for fuel comprising methanol 20 to pass through the reformer device 10. The fuel comprising methanol 20 is also indicated as an arrow in Fig. 1. Further, the fuel flow module 14 comprises a catalyst 24. With the help of the catalyst 24 the fuel comprising methanol 20 is reformed to a reformed gas 26 indicated as a further arrow 26 in Fig. 1.

The reformer device 10 can keep the fuel comprising methanol 20 passing through the reformer device 10 within a temperature range. Keeping the fuel comprising methanol 20 in the temperature range allows a reformation and methanation of the fuel comprising methanol 20 to the reformed gas 26 by use of the catalyst 24.

The reformer device 10 comprises a reformer inlet side 30 and a reformer outlet side 32, wherein the reformer device 10 extends in a longitudinal direction 28 from the reformer inlet side 30 to the reformer outlet side 32. The fuel comprising methanol flows from the reformer inlet side 30 to the reformer outlet side 32 while being reformed. As can be seen in Fig. 1 a mass stream 22 flows from the reformer outlet side 32 to the reformer inlet side 30. Alternatively, the mass stream 22 can flow from the reformer inlet side 30 to the reformer outlet side 32. The mass stream 22 is used to temper, in particular to cool, the reformer device 10 and therefore also the reformed gas 26.

Because of the thermal connection between the tempering module 12 and the fuel flow module 14 it is possible to temper the fuel flow module 14 and the reformed gas 26 passing through the reformer device 10. Therefore, the reformed gas 26 can be kept in the right temperature range while passing through the reformer device 10 and when exiting the reformer device 10 at a reformer outlet side 32. Thus, a reduction of the amount of methane (CH4) in the reformed gas 26 can be avoided.

The cross sectional area 34 of the flow passage 18 of the tempering module 12 can be larger than 1,5 times, larger than 2 times or larger than 3 times the cross sectional area 36 of the flow passage 16 of the fuel flow module 14. In FIG. 1, which shows a section through a reformer device 10, the cross-sectional areas 34, 36 are shown as arrows with two arrowheads. The larger the cross sectional area 34 of the flow passage 18 of the tempering module 12 is the larger is also the possible heat transfer from the fuel flow module 14 to the tempering module 12.

As can be seen in Fig. 1, the tempering module 12 comprises a tempering module heat exchange element 38 and the fuel flow module 14 comprises a fuel flow module heat exchange element 40, wherein the tempering module heat exchange element 38 comprises a plate 42, and wherein the fuel flow module heat exchange element 40 comprises a plate 44.

Alternatively, each of the tempering module heat exchange element 38 and the fuel flow module heat exchange element 40 can comprise several plates. Further, each of the tempering module heat exchange element 38 and the fuel flow module heat exchange element 40 can comprise one or more pipes.

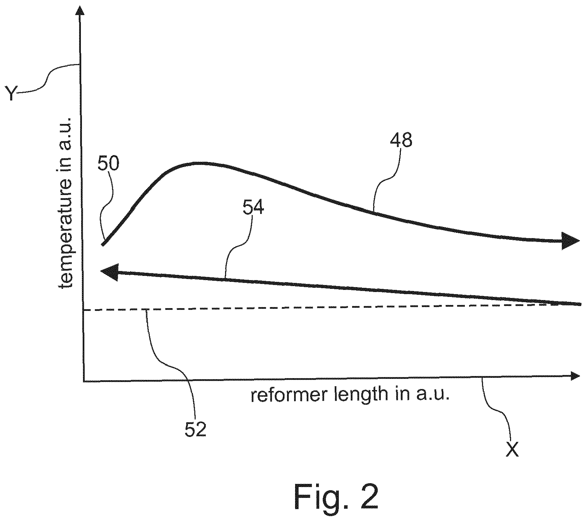

With respect to Fig. 2 a schematic diagram of temperature curves along the longitudinal direction 28 of the reformer device 10 from Fig. 1 is shown. In the diagram the X axis represents the reformer lengths in arbitrary units in the longitudinal direction 28 of the reformer device 10. The Y axis represents the temperature in arbitrary units. As can be seen in Fig. 2 the temperature 48 of the fuel comprising methanol 20 which is reformed to the reformed gas 26 starts at the reformer inlet side 30 with a reformer device inlet temperature 50. Because the reforming reaction is exothermic below about 540°C, i.e. energy is released, the temperature 48 increases at the beginning of the curve. Then, the temperature 48 of the fuel comprising methanol 20 which is reformed to the reformed gas 26 decreases when going along the X axis because of the cooling. The temperature 48 of the fuel comprising methanol 20 which is reformed to the reformed gas 26 is always above the methanation light-off temperature 52 of the catalyst 24. The methanation light-off temperature 52 is shown in Fig. 2 as a dashed line. The temperature 54 of the mass stream 22 is also shown in Fig. 2. The mass stream 22 enters the reformer device 10 at the reformer outlet side 32. Therefore, the temperature 54 of the mass stream 22 is coldest on the right side of the X axis and increases when going from the right side to the left side of the X axis.

The present invention discloses a control method for a reformer device 10 of a fuel cell system 100. The control method keeps the fuel comprising methanol 20 within a temperature range in the reformer device 10. The control method comprises the following steps:
In a first step the fuel comprising methanol 20 is pre-tempered to a reformer device inlet temperature 50, which is at or higher than a methanation light-off temperature 52 of a catalyst 24 of the reformer device 10.

In a second step the pre-tempered fuel comprising methanol 20 is directed through the reformer device 10 in order to allow a catalytic reformation and methanation of the fuel comprising methanol 20 to a reformed gas 26.

In a third step a temperature of the reformed gas 26 in the reformer device 10 is kept in the temperature range during passage through the reformer device 10 from a reformer inlet side 30 to a reformer outlet side 32, wherein a lower limit of the temperature range of the temperature of the reformed gas 26 is the methanation light-off temperature 52 of a catalyst 24, and wherein the difference between the lower limit and an upper limit of the temperature range is smaller than 150°C.

The aim is to reach high efficiencies of a fuel cell 110, in particular a solid oxide fuel cell (SOFC). To reach this aim a methanation reaction in the reformer device is necessary and the outlet temperature of the reformed gas 26 of the reformer device 10 should not be too high. If the outlet temperature of the reformed gas 26 is too high the amount of methane decreases. The methane can be internally reformed in the stack of the fuel cell 110 which can reduce the air volume and thus the fan output and therefore the efficiency can be increased.

Alternatively, the difference between the lower limit and the upper limit of the temperature range is smaller than 100°C and or even smaller than 50°C.

The catalyst 24 can be a precious metal catalyst having a methanation light-off temperature 52 in the range of 380°C to 470°C, preferably in the range of 390°C to 460°C and more preferably in the range of 400°C to 450°C. The precious metal catalyst is suitable for the catalytic reformation and methanation of the fuel comprising methanol 20 to the reformed gas 26.

Further, the mass stream 22 can be larger than 1.5 times the stream of reformed gas 26 or the mass stream 22 can be larger than 2 times the stream of reformed gas 26 or the mass stream 22 can be larger than 3 times the stream of reformed gas 26. A large mass stream 22 can effectively temper the stream of reformed gas 26.

The present invention discloses further a computer program product for carrying out the described control method.

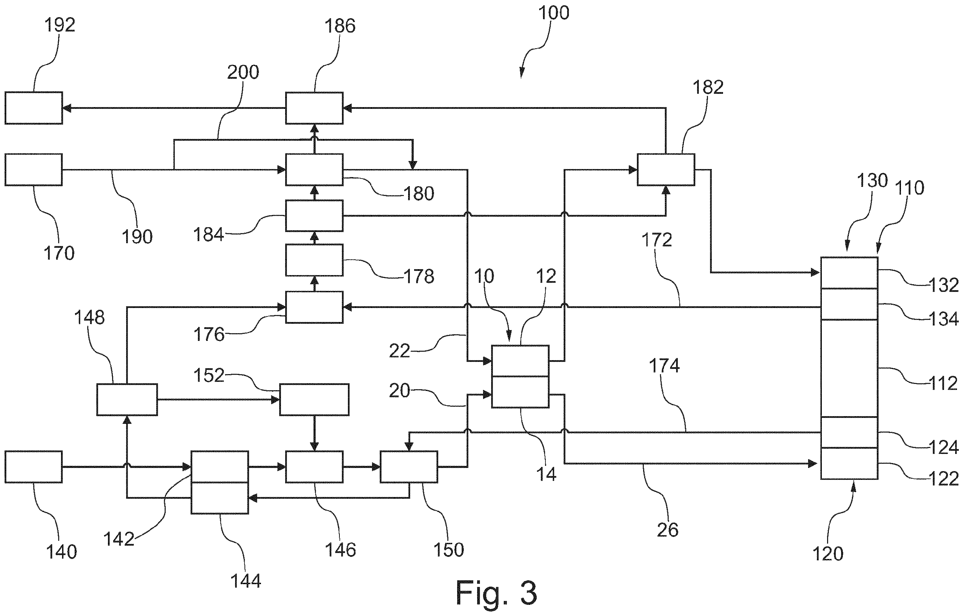

Fig. 3 shows a schematic view of an embodiment of a fuel cell system 100 according to the invention. The fuel cell system 100 comprises the reformer device 10, a fuel supply heat exchanger 150 for pre-tempering the fuel comprising methanol 20, and a fuel cell 110, in particular a solid oxide fuel cell (SOFC).

The fuel cell 110 comprises a fuel cell stack 112, an anode section 120 and a cathode section 130. The anode section 120 comprises an anode feeding section 122, where the reformed gas 26 can enter the anode section 120. Further, the anode section 120 comprises an anode output section 124, where a reformed gas exhaust flow 174 exits the anode section 120. The cathode section 130 comprises a cathode feeding section 132, where the air can enter the cathode section 130. Further, the cathode section 130 comprises a cathode output section 134, where an air exhaust flow 172 exits the cathode section 130.

Air from the air supply 170 is directed to the first air supply heat exchanger 180. The first air supply heat exchanger 180 pre-tempers (in particular heats) the air above the methanation light-off temperature 52 (>400°C). Then, the air is directed through the tempering module 12 of the reformer device 10. The air, i.e. the mass stream 22, ensures that the catalyst 24 is above the methanation light-off temperature. At the same time the air, i.e. mass stream 22, cools the reformer device 10 in order to transport away the heat generated by the reforming and to keep the temperature of the reformed gas 26 low. After passing the reformer device 10 the air is directed to a second air supply heat exchanger 182, where the air is pre-tempered (in particular preheated) to a cathode inlet temperature.

The air exhaust flow 172 from the cathode output section 134 is directed via junction 176 to the oxi-cat 178. This arrangement is particularly useful for MSC fuel cell stacks, since the outlet temperatures at the fuel cell stack are not too high. At the oxi-cat inlet (junction 176), the air exhaust flow 172 is mixed with the remaining reformed gas exhaust flow 174 and thermally converted in the oxi-cat 178. The resulting hot exhaust gas is divided into two paths at split 184. One path is directed to the first air supply heat exchanger 180 for pre-tempering the air before entering the reformer device 10. The other path is directed to the second air supply heat exchanger 182 for pre-tempering the air before entering the fuel cell 110. It can be advantageous if the distribution of the hot exhaust gas at the oxi-cat outlet is defined by geometric elements (e.g. orifice plate) or can be controlled by active components (e.g. hot gas flaps). At junction 186 the two paths are reunited and directed to the exhaust 192.

Fuel comprising methanol 20 from a fuel tank 140 is directed to an evaporator 142, where the fuel comprising methanol 20 is vaporized. The heat is provided by the reformed gas exhaust flow 174 which is directed to heat exchanger 144 which is thermally connected to the evaporator 142. The vaporized fuel comprising methanol 20 is directed via junction 146 (where it is mixed with the recirculated reformed gas exhaust flow 174) to the fuel supply heat exchanger 150. At the fuel supply heat exchanger 150 the vaporized fuel comprising methanol 20 is pre-tempered to the reformer device inlet temperature 50 which is above the methanation light-off temperature 52 of the catalyst 24. The mixture of evaporated fuel comprising methanol 20 and the recirculated reformed gas exhaust flow 174 is then fed into the reformer device 10. The temperature of the reformed gas 26 in the reformer device 10 can be kept in the temperature range because of the heat exchange with the air (mass stream 22). The reformed gas 26 is then fed to the anode feeding section 122 of the fuel cell 110. This arrangement is particularly useful if the temperature requirement is about 450°C to 500°C when entering the anode feeding section (MSC technology).

The reformed gas exhaust flow 174 is directed to the fuel supply heat exchanger 150 to pre-temper the vaporized fuel comprising methanol 20. Then the reformed gas exhaust flow 174 is directed via heat exchanger 144 to split 148. Part of the reformed gas exhaust flow 174, which has now been further cooled (150°C - 350°C), is returned to the fuel section via a recirculation blower 152. The remaining part is mixed with the air exhaust flow 172 at junction 176 and is thermally utilized in the oxi-cat 178.

The fuel cell system 100 can preheat the air provided from the air supply 170 by the first air supply heat exchanger 180 and/or the second air supply heat exchanger 182 before entering the fuel cell 110. With this configuration of the fuel cell system 100 it is possible to temper the air to a reformer device inlet temperature 50 before entering the reformer device 10 and to differently temper the air before entering the fuel cell 110.

For cooling the fuel flow module 14 and the reformed gas 26 a massive mass stream 22 is needed. As can be seen in Fig. 3, the fuel cell system 100 directs 100% of the air provided from the air supply 170 to the reformer device 10 for keeping the fuel comprising methanol 20 which is to be reformed in the reformer device 10 within a given temperature range in the reformer device 10.

The reformer device 10 can be arranged between the first air supply heat exchanger 180 and the second air supply heat exchanger 182 with respect to a flow direction of the air provided from the air supply 170. Therefore, the air before entering the reformer device 10 can be tempered differently compared to the air before entering the fuel cell 110.

The fuel cell system 100 comprises an air supply line 190 extending from the air supply 170 to the fuel cell 110, wherein the first air supply heat exchanger 180 and the second air supply heat exchanger 182 are arranged on the air supply line 190. Further, the fuel cell system 100 comprises an air bypass 200 for bypassing the first air supply heat exchanger 180 on the air supply line 190 to control the temperature of the air. The air bypass 200 joins the air supply line 190 before the reformer device 10.

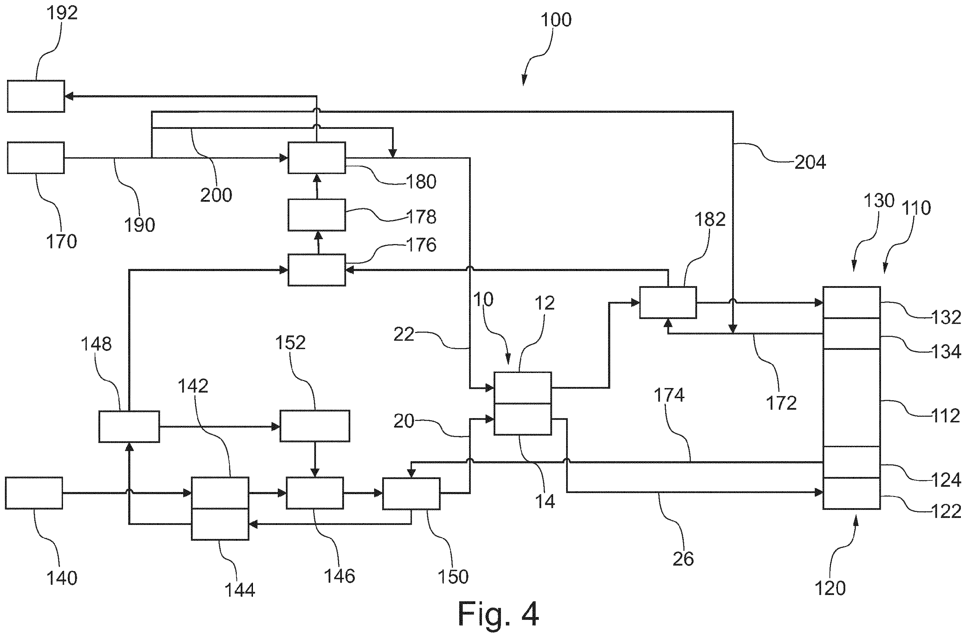

With respect to Fig. 4, 5, 6, 7 and 8 only the differences compared to Fig. 3 are described.

In Fig. 4 a schematic view of another embodiment of a fuel cell system 100 is shown. The air exhaust flow 172 is directed directly to the second air supply heat exchanger 182. The reformed gas exhaust flow 174 is directed to fuel supply heat exchanger 150, then to heat exchanger 144, then to split 148, then to junction 176, then to oxi-cat 178, then to first air supply heat exchanger 180 and finally to exhaust 192. Therefore, the reformed gas exhaust flow 174 does not flow via the second air supply heat exchanger 182.

Further, there is an air bypass 204 to control the temperature bypassing the first air supply heat exchanger 180 and the second air supply heat exchanger 182. Air bypass 204 joins the air exhaust flow 172 before the second air supply heat exchanger 182.

For cooling the fuel flow module 14 and the reformed gas 26 a massive mass stream 22 is needed. Therefore, the fuel cell system 100 can direct more than 80%, or more than 90% or more than 99% of the air provided from the air supply 170 to the reformer device 10 for keeping the fuel comprising methanol 20 which is to be reformed in the reformer device 10 within a given temperature range in the reformer device 10.

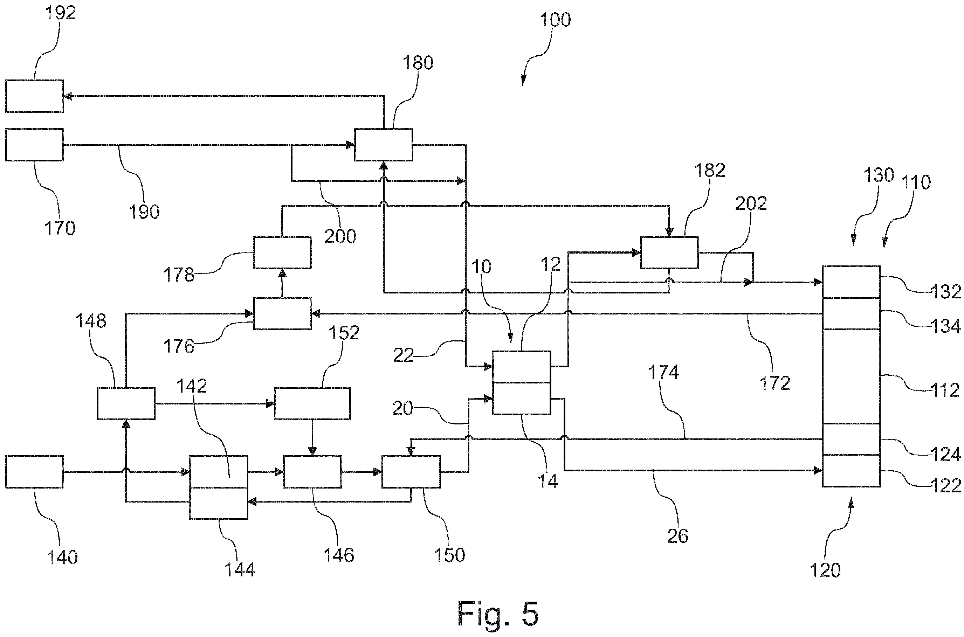

Fig. 5 shows a schematic view of another embodiment of a fuel cell system 100. The reformed gas exhaust flow 174 is directed to fuel supply heat exchanger 150, then to heat exchanger 144, then to split 148, then to junction 176, then to oxi-cat 178 and then to second air supply heat exchanger 182. The air exhaust flow 172 is directed to junction 176, then to oxi-cat 178 and then to second air supply heat exchanger 182. Therefore, the air exhaust flow 172 and the reformed gas exhaust flow 174 are directed via the second air supply heat exchanger 182. An air bypass 202 to control the temperature can bypass the second air supply heat exchanger 182. Air bypass 202 joins the air supply line 190 before the cathode feeding section 132.

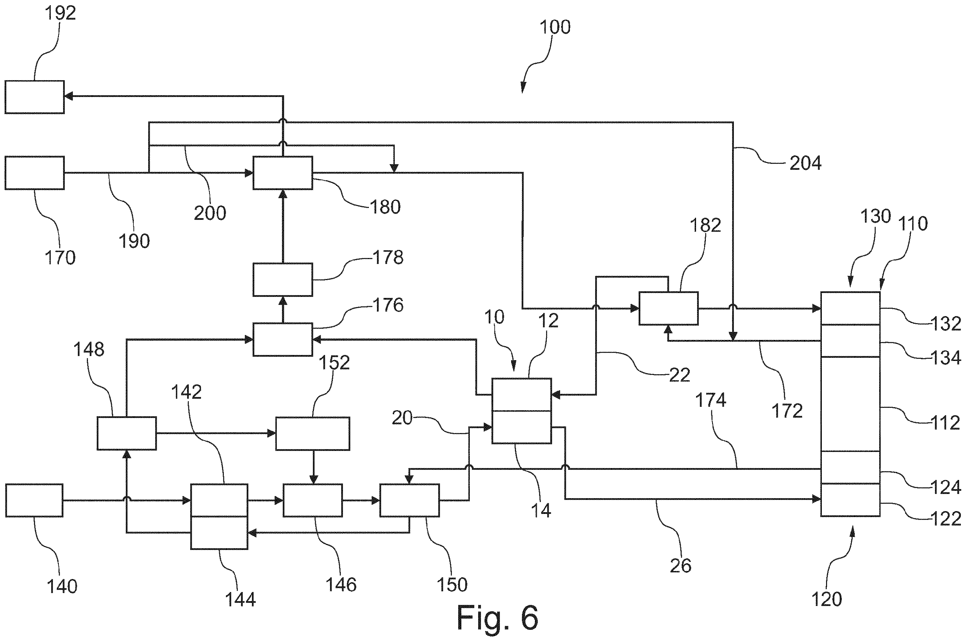

In principle, the mass stream 22 can be provided from the air supply 170 of the fuel cell system 100 (compare Fig. 3, 4 and 5) and/or from the air exhaust flow 172 of the fuel cell system 100 (compare Fig. 6, 7 and 8). Further the mass stream 22 can flow in a same direction (see Fig. 3, 4 and 5) or in an opposite direction (see Fig. 6, 7 and 8) than the stream of reformed gas 26.

Fig. 6 shows a schematic view of another embodiment of a fuel cell system 100. The air exhaust flow 172 is directed to the reformer device 10 as mass stream 22 via the second air supply heat exchanger 182. There is an air bypass 204 to control the temperature bypassing the first air supply heat exchanger 180 and the second air supply heat exchanger 182. Air bypass 204 joins the air exhaust flow 172 before the second air supply heat exchanger 182.

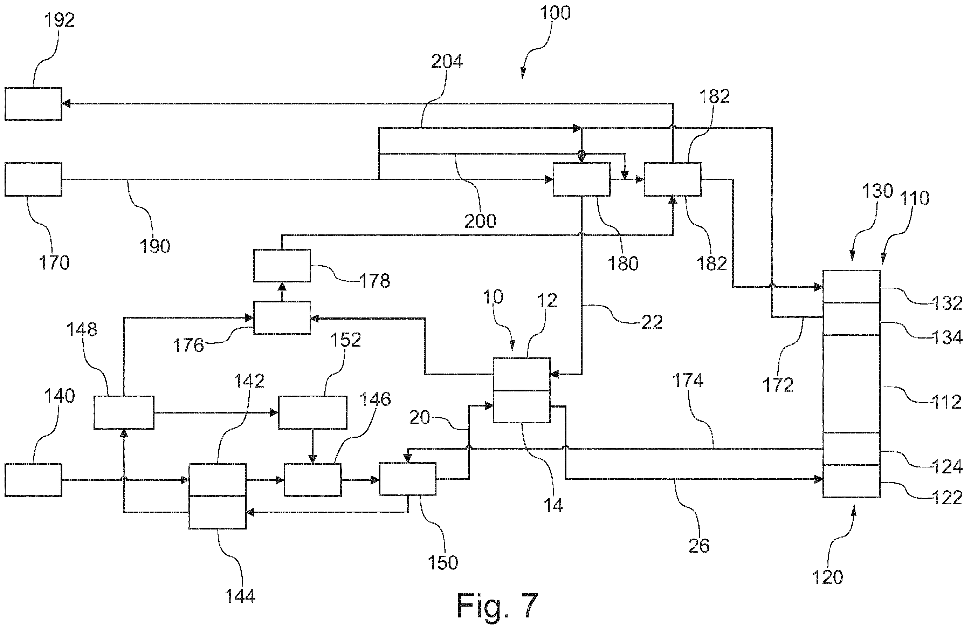

In Fig. 7 a schematic view of another embodiment of a fuel cell system 100 is shown. The air exhaust flow 172 is directed to the reformer device 10 as mass stream 22 via the first air supply heat exchanger 180. The exhaust output gas from the oxi-cat 178 is directed to the exhaust 192 only via the second air supply heat exchanger 182. There is an air bypass 204 to control the temperature bypassing the first air supply heat exchanger 180 and the second air supply heat exchanger 182. Air bypass 204 joins the air exhaust flow 172 before the first air supply heat exchanger 180.

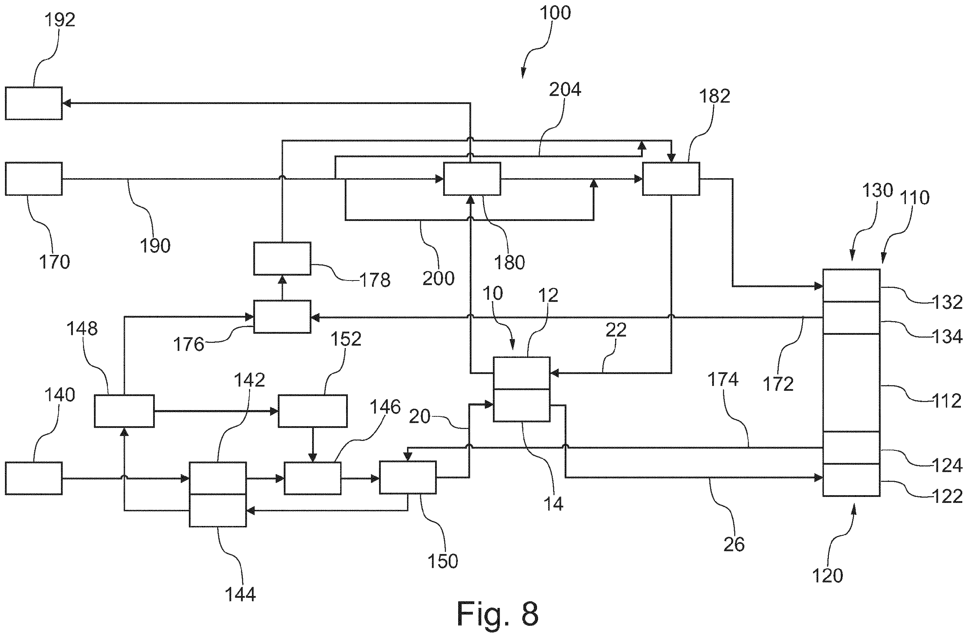

Fig. 8 shows a schematic view of another embodiment of a fuel cell system 100. The reformed gas exhaust flow 174 is directed to fuel supply heat exchanger 150, then to heat exchanger 144, then to split 148, then to junction 176, then to oxi-cat 178 and then to second air supply heat exchanger 182. The air exhaust flow 172 is directed to junction 176, then to oxi-cat 178 and then to second air supply heat ex-changer 182. Therefore, after passing the second air supply heat exchanger 182 the air exhaust flow 172 and the reformed gas exhaust flow 174 are directed as mass stream 22 to the reformer device 10. There is an air bypass 204 to control the temperature which starts on the air supply line 190 between the air supply 170 and the first air supply heat exchanger 180 and joins the air exhaust flow 172 and the reformed gas exhaust flow 174 before the second air supply heat exchanger 182. In this respect, when considering the air supply line 190 from the air supply 170 to the fuel cell 110 the first air supply heat exchanger 180 and the second air supply heat exchanger 182 are bypassed with air bypass 204.

The above description of the drawings describes the present invention only by way of example.

### Reference signs

- 10: reformer device
- 12: tempering module
- 14: fuel flow module
- 16: flow passage for the fuel comprising methanol
- 18: flow passage for the mass stream
- 20: fuel comprising methanol
- 22: mass stream
- 24: catalyst
- 26: reformed gas
- 28: longitudinal direction
- 30: reformer inlet side
- 32: reformer outlet side
- 34: cross sectional area of the flow passage of the tempering module
- 36: cross sectional area of the flow passage of the fuel flow module
- 38: tempering module heat exchange element
- 40: fuel flow module heat exchange element
- 42: plate of the tempering module heat exchange element
- 44: plate of the fuel flow module heat exchange element
- 46: stream of reformed gas
- 48: temperature of the fuel comprising methanol
- 50: reformer device inlet temperature
- 52: methanation light-off temperature of the catalyst
- 54: temperature of the mass stream

- 100: fuel cell system
- 110: fuel cell
- 112: fuel cell stack
- 120: anode section
- 122: anode feeding section
- 124: anode output section
- 130: cathode section
- 132: cathode feeding section
- 134: cathode output section
- 140: fuel tank
- 142: evaporator
- 144: heat exchanger
- 146: junction
- 148: split
- 150: fuel supply heat exchanger
- 152: recirculation blower
- 170: air supply
- 172: air exhaust flow
- 174: reformed gas exhaust flow
- 176: junction
- 178: oxi-cat
- 180: first air supply heat exchanger
- 182: second air supply heat exchanger
- 184: split
- 186: junction
- 190: air supply line
- 192: exhaust
- 200: air bypass
- 202: air bypass
- 204: air bypass

## Claims

1. Control method for a reformer device (10) of a fuel cell system (100) to keep a fuel comprising methanol (20) within a temperature range in the reformer device (10), **characterized by** the following steps:
- pre-tempering the fuel comprising methanol (20) to a reformer device inlet temperature (50), which is at or higher than a methanation light-off temperature (52) of a catalyst (24) of the reformer device (10),
- directing the pre-tempered fuel comprising methanol (20) through the reformer device (10) in order to allow a catalytic reformation and methanation of the fuel comprising methanol (20) to a reformed gas (26), and
- keeping a temperature of the reformed gas (26) in the reformer device (10) in the temperature range during passage through the reformer device (10) from a reformer inlet side (30) to a reformer outlet side (32), wherein a lower limit of the temperature range of the temperature of the reformed gas (26) is the methanation light-off temperature (52) of a catalyst (24), and wherein the difference between the lower limit and an upper limit of the temperature range is smaller than 150°C.

2. Control method according to claim 1, **characterized in that** the difference between the lower limit and the upper limit of the temperature range is smaller than 100°C and preferably smaller than 50°C.

3. Control method according to any of the preceding claims, **characterized in that** the catalyst (24) is a precious metal catalyst or a catalyst comprising nickel (Ni) having a methanation light-off temperature (52) in the range of 380°C to 470°C, preferably in the range of 390°C to 460°C and more preferably in the range of 400°C to 450°C.

4. Control method according to any of the preceding claims, **characterized in that** keeping the temperature of the reformed gas (26) in the reformer device (10) in the temperature range is realized by heat exchange with a mass stream (22) of an air supply (170) of the fuel cell system (100) and/or an air exhaust flow (172) of the fuel cell system (100), wherein the mass stream (22) is flowing in a same direction or in an opposite direction than a stream (46) of reformed gas (26).

5. Control method according to claim 4, **characterized in that** the mass stream (22) is larger than 1.5 times the stream (46) of reformed gas (26) or the mass stream (22) is larger than 2 times the stream (46) of reformed gas or the mass stream (22) is larger than 3 times the stream (46) of reformed gas or the mass stream (22) is larger than 4 times the stream (46) of reformed gas.

6. Computer program product for carrying out a control method according to any of the preceding claims.

7. Reformer device (10) for keeping a pre-tempered fuel comprising methanol (20) passing through the reformer device (10) to be reformed within a temperature range, **characterized by**
a tempering module (12) comprising a flow passage (18) for a mass stream (22) to pass through the reformer device (10), and
a fuel flow module (14) comprising a flow passage (16) for the fuel comprising methanol (20) to pass through the reformer device (10), wherein the flow passage (16) comprises a catalyst (24) for a reformation and methanation of the fuel comprising methanol (20) to a reformed gas (26), and
wherein the tempering module (12) and the fuel flow module (14) are thermally connected, so that the tempering module (12) is adapted to temper the fuel flow module (14) and the reformed gas (26) passing through the reformer device (10).

8. Reformer device (10) according to claim 7, **characterized in that** the reformer device (10) comprises a reformer inlet side (30) and a reformer outlet side (32) and the reformer device (10) extends in a longitudinal direction (28) from the reformer inlet side (30) to the reformer outlet side (32), wherein the fuel flow module (14) comprising the flow passage (16) is adapted for the fuel comprising methanol (20) to flow from the reformer inlet side (30) to the reformer outlet side (32) while being reformed, and wherein the tempering module (12) comprising the flow passage (18) is adapted for the mass stream (22) to flow from the reformer inlet side (30) to the reformer outlet side (32) or is adapted for the mass stream (22) to flow from the reformer outlet side (32) to the reformer inlet side (30).

9. Reformer device (10) according to claims 7 or 8, **characterized in that** the cross sectional area (34) of the flow passage (18) of the tempering module (12) is larger than 1,5 times, 2 times, 3 times or 4 times the cross sectional area (36) of the flow passage (16) of the fuel flow module (14).

10. Reformer device (10) according to any of claims 7 to 9, **characterized in that** the tempering module (12) comprise a tempering module heat exchange element (38) and the fuel flow module (14) comprise a fuel flow module heat exchange element (40), wherein the tempering module heat exchange element (38) comprise at least one plate (42) and/or at least one pipe, and wherein the fuel flow module heat exchange element (40) comprise at least one plate (44) and/or at least one pipe.

11. Fuel cell system (100) comprising a reformer device (10) according to any of claims 7 to 10, a fuel supply heat exchanger (150) for pre-tempering the fuel comprising methanol (20), and a fuel cell (110), in particular a solid oxide fuel cell (SOFC).

12. Fuel cell system (100) according to claim 11, **characterized in that** the fuel cell system (100) comprises an air supply (170), a first air supply heat exchanger (180) and a second air supply heat exchanger (182), wherein the fuel cell system (100) is adapted to preheat air provided from the air supply (170) by the first air supply heat exchanger (180) and/or the second air supply heat exchanger (182) before entering the fuel cell (110).

13. Fuel cell system (100) according to claim 12, **characterized in that** the fuel cell system (100) is adapted to direct more than 80%, or more than 90% or more than 99% of the air provided from the air supply (170) to the reformer device (10) for keeping the fuel comprising methanol (20) which is to be reformed in the reformer device (10) within a given temperature range in the reformer device (10).

14. Fuel cell system (100) according to claims 12 to 13, **characterized in that** the reformer device (10) is arranged between the first air supply heat exchanger (180) and the second air supply heat exchanger (182) with respect to a flow direction of the air provided from the air supply (170).

15. Fuel cell system (100) according to claims 12 to 14, **characterized in that** the fuel cell system (100) comprises an air supply line (190) extending from the air supply (170) to the fuel cell (110), wherein the first air supply heat exchanger (180) and the second air supply heat exchanger (182) are arranged on the air supply line (190), wherein the fuel cell system (100) comprises an air bypass (200) for bypassing the first air supply heat exchanger (180) on the air supply line and/or the fuel cell system (100) comprises an air bypass (202) for bypassing the second air supply heat exchanger (182) on the air supply line (190) and/or the fuel cell system (100) comprises an air bypass (204) for bypassing the first air supply heat exchanger (180) and the second air supply heat exchanger (182) on the air supply line (190).
